# EUROPEAN PATENT SPECIFICATION

(11) **EP 1 477 356 B1**
(45) Date of publication and mention of the grant of the patent: **31.12.2008**
(21) Application number: 04076380.7
(22) Date of filing: 10.05.2004
(51) Int. Cl.: B60N 2/28

(54) **Infant vehicle seat**
Kindersitz für Fahrzeuge
Siège d'enfants pour véhicules

(30) Priority: 14.05.2003 NL 1023422
(43) Date of publication of application: 17.11.2004
(60) Divisional application: 08075202.5
(73) Proprietor: Maxi Miliaan B.V., 5704 RD Helmond (NL)
(72) Inventor: Siewertsen, Adriaan, 5961 MD Son en Breugel (NL); Van Geer, Rene Johan, 2281 AJ Rijswijk (NL)
(74) Representative: Valkonet, Rutger

(56) References cited:
- EP-A- 0 970 842
- EP-A- 1 180 448
- EP-A- 1 344 679
- DE-A- 19 744 978
- DE-A- 19 946 579
- DE-C- 19 834 861
- US-A1- 2001 010 431
- US-B1- 6 375 260

## Description

The invention relates to an infant vehicle seat comprising a frame as well as connectors connected to the frame which, in use, can be detachably connected to mounting elements present in a vehicle, which frame further comprises at least one support leg which, in use, is supported on the vehicle on a side of the infant vehicle seat remote from the connectors.

With such an infant vehicle seat, which is known from European patent application EP-A1-1 180 448, which shows the features of the preamble of claim 1 the frame is connected to mounting elements present in the vehicle by means of the connectors. The mounting elements are brackets, for example, which are connected to the chassis of the vehicle. The mounting elements are disposed between the back portion and the seat portion of the vehicle seat to which the infant vehicle seat is mounted. Although such mounting elements are increasingly being used, tilting of an infant vehicle seat that is connected to the mounting elements by means of the connectors with respect to the mounting elements may easily occur, for example in case of a collision. In order to inhibit said tilting, the known infant vehicle seat is provided with a support leg, which is connected to the frame on a side remote from the connectors. In use, the support leg is supported on a floor of the vehicle, and undesirable tilting of the infant vehicle seat is prevented in a simple manner.

Since the infant vehicle seat with the support leg attached thereto is relatively voluminous, so that the infant vehicle seat is both difficult to mount in the vehicle and difficult to store and transport, it is proposed in the aforesaid European patent application to connect the support leg detachably to the infant vehicle seat.

Although this is an improvement both with regard to the mounting of the infant vehicle seat in the vehicle and with regard to the storage of the infant vehicle seat, the known infant vehicle seat has this drawback that a user may simply forget to fit the support leg when mounting the infant vehicle seat in the vehicle. As a result, undesirable tilting of the infant vehicle seat with respect to the mounting elements will still occur in case of a collision.

The object of the invention is to provide an infant vehicle seat in which the advantages of the known infant vehicle seat are retained whilst the drawbacks of the known infant vehicle seat are avoided.

This object is accomplished with the infant vehicle seat according to the invention in that the connectors are movable with respect to the frame between a mounting position, in which the infant vehicle seat can be connected to the mounting elements, and a storage position, in which the connectors cannot be connected to the mounting elements, whilst the support leg is movable between a supporting position and a storage position, wherein the connectors can be moved from the storage position to the mounting position, and vice versa, in use as a result of movement of the support leg from the storage position to the supporting position.

Since the movement of the connectors from the storage position to the mounting position, and vice versa, is directly linked with the movement of the support leg from the storage position to the supporting position, it is ensured in a relatively simple manner that the support leg will be in the supporting position upon connecting the connectors to the mounting elements.

In the storage position of the support leg, in which the support leg may have been pivoted, tilted or moved with respect to the frame or been removed from the frame, the connectors are in the storage position at all times, thus making it impossible to mount the infant vehicle seat in the vehicle by means of the connectors.

It is noted that from DE-A1-197.44.978 and US-A1-2001/0010431 infant vehicle seats provided with connectors are known. The infant vehicle seats that are shown therein, however, do not comprise a support leg which, in use, is supported on the vehicle on a side of the infant vehicle seat remote from the connectors.

One embodiment of the infant vehicle seat according to the invention is characterized in that the support leg is pivotable between the storage position and the supporting position.

A pivotable supporting leg is relatively easy to realise, with pivoting of the support leg between the storage position and the supporting position resulting in movement of the connectors from the storage position to the mounting position.

Another embodiment of the infant vehicle seat according to the invention is characterized in that the support leg is disposed on the same side of the infant vehicle seat as a seat portion of the infant vehicle seat in the storage position thereof.

Since the support leg is disposed on the same side as the seat portion in the storage position, the support leg hardly adds to the volume taken up by the infant vehicle seat. In addition, the user can readily gain access to and operate the support leg when mounting the infant vehicle seat in the vehicle.

Yet another embodiment of the infant vehicle seat according to the invention is characterized in that the support leg includes an angle with the vertical in the storage position.

Since the support leg includes an angle of preferably 20-45° with the vertical, the support leg will not be in the field of vision of an infant present in the infant vehicle seat when the infant vehicle seat is mounted in a vehicle by means of a three-point seat belt rather than by means of connectors. This prevents the infant from getting hurt by the support leg in the event of a collision. Also when the infant vehicle seat is mounted in the vehicle by means of a three-point seat belt, moving the support leg to the supporting position is possible, of course, if a user wishes to do so.

The invention will be explained in more detail with reference to the drawing, in which:
Fig. 1 is a perspective view of an infant vehicle seat according to the invention, in which a support leg and connectors are in the storage position;
Fig. 2 is a perspective view of the infant vehicle seat that is shown in Fig. 1, in which the support leg is in the supporting position and the connectors are in the mounting position;
Figs. 3-6 show different situations of the connecting and disconnecting of the connectors, wherein the situation of the connectors can be indicated by means of a marking element according to the invention.

In the figures, like parts are indicated by the same numerals.

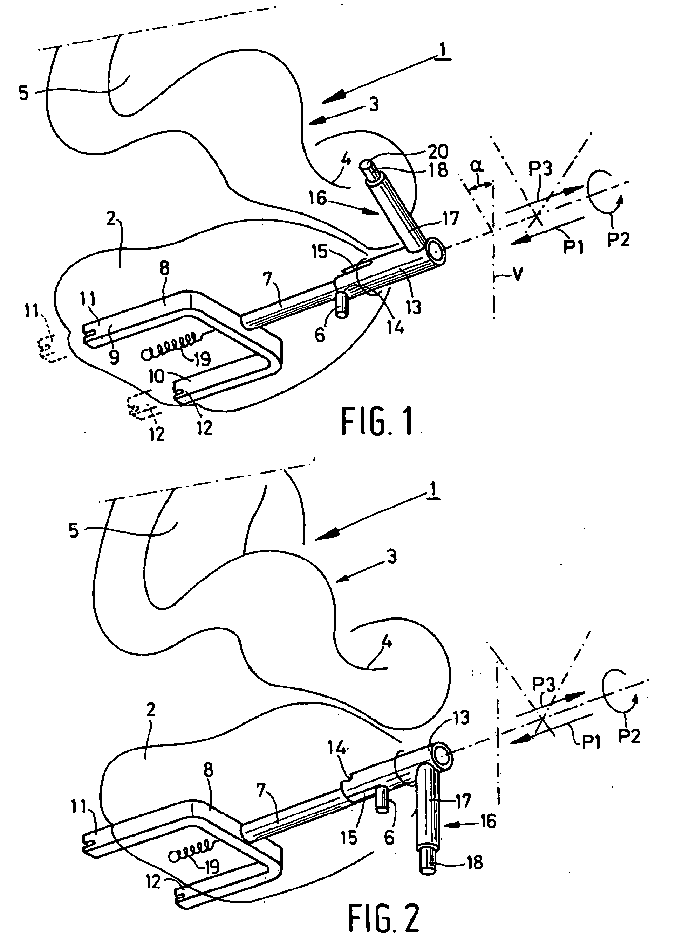

Figs. 1 and 2 are perspective views of an infant vehicle seat 1 according to the invention, which comprises a frame 2 and a seat 3 connected to the frame 2. The seat 3 comprises a seat portion 4 and a back portion 5. The seat 3 is known per se and is only schematically indicated, therefore. On a side remote from the seat 3, the frame 2 is provided with a substantially vertically extending pin 6, which is rigidly connected to the frame 2. The pin 6 extends through a slot formed in a rod 7, as a result of which the rod 7 is movable in the direction indicated by the arrow P1 and in the opposite direction with respect to the pin 6. The rod 7 is provided with a U-shaped bracket 8 on a side remote from the pin 6, which bracket is provided with connectors 11, 12 at ends 9, 10 remote from the rod 7. The connectors 11, 12 are known per se, for example from European patent application EP-A1-1 180 448, being referred to as isofix connectors, for example, in the industry.

On a side remote from the U-shaped bracket 8, the rod 7 is provided with a sleeve 13, which sleeve is pivotable about the rod 7 in the direction indicated by the arrow P2 and in the opposite direction. The sleeve 13 is provided with two slots 14, 15 of different length, which extend parallel to the longitudinal direction of the rod 7. On a side remote from the slots 14, 15, the sleeve 13 is provided with a support leg 16 extending transversely to the sleeve 13. The support leg 16 comprises a number of tubes 17, 18, which can telescope with respect to each other.

In the position of the support leg 16 that is shown in Fig. 1, said support leg 16 is disposed on the same side of the frame 2 as the back portion 5. The support leg 16 includes an angle α with the vertical V of 30°. In this position of the support leg 16, the relatively short slot 14 of the sleeve 13 surrounds the pin 6 that is rigidly connected to the frame 2. The rod 7 and the sleeve 13 connected thereto are pulled in the direction indicated by the arrow P1 by means of a spring 19 connected to the frame 2, as a result of which the slot 14 firmly surrounds the pin 6. The rod 7 connected to the sleeve 13 and the connectors 11, 12 connected to the rod 7 via the U-shaped bracket 8 are positioned under the frame 2 in such a manner that the connectors 11, 12 cannot be connected to mounting elements (not shown) present in a vehicle. Said mounting elements, which are to be connected to the connectors, are known per se and will not be discussed in more detail herein, therefore. In the storage position of the support leg 16 that is shown in Fig. 1, the telescopic tubes 17, 18 have been telescoped, so that the support leg 16 is relatively short.

If a the user wishes to mount the infant vehicle seat 1 in a vehicle, the infant vehicle seat 1 is positioned on a seat of the vehicle. Subsequently, the support leg 16 is jointly moved with the sleeve 13 connected thereto in a direction indicated by the arrow P3, opposite the direction indicated by the arrow P1, against the spring force of the spring 19 until 1 the slot 14 no longer surrounds the pin 6. Also the rod 7 and the U-shaped bracket 8 connected thereto and the connectors 11, 12 connected to said bracket undergo the same movement in the direction indicated by the arrow P3. Subsequently, the support leg 16 and the sleeve 13 are jointly pivoted about the rod 7 in the direction indicated by the arrow P2, until the slot 15 is positioned opposite the pin 6. Following that, the support leg 16, the sleeve 13, the rod 7, the U-shaped bracket 8 and the connectors 11, 12 connected thereto are moved in the direction indicated by the arrow P1 partially under the influence of the force exerted by the spring 19, until the pin 6 abuts against one end of the slot 15. The support leg 16 is now in the position that is shown in Fig. 2, whilst the connectors 11, 12 are in a mounting position. In Fig. 1, said mounting position is illustrated in dotted lines. The length of the support leg 16 must now be adjusted to such an extent that an end 20 of the tube 18 remote from the sleeve 13 is firmly supported on a floor of the vehicle. This will be done practically automatically by a user who has taken hold of the support leg 16. It is possible, if desired, for the tube 18 to slide out of the tube 17 automatically under the influence of the force of gravity, in which case a known ratchet mechanism prevents the tube 18 from sliding into the tube 17 again. The tube 18 can only be slid into the tube 17, for example with a view to subsequently moving the support leg to the storage position that is shown in Fig. 1, by unlocking the ratchet mechanism.

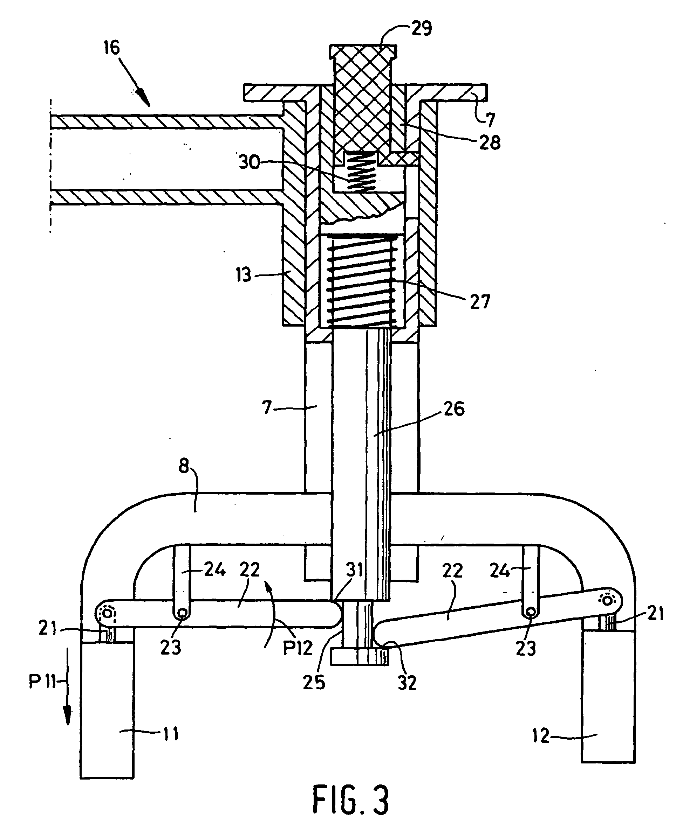

The operation of the connectors 11, 12 connected to the ends of the U-shaped bracket 8 is shown more clearly in Fig. 3. Each connector 11, 12 is provided with a draw link 21 extending parallel to the rod 7, which draw link 21 is pivotally connected to a lever 22 on a side remote from the connector 11, 12. The lever 22 is pivot-mounted to an arm 24 connected to the U-shaped bracket 8 by means of a pivot pin 23. An end of the lever 22 remote from the draw link 21 is supported in an elongated recess 25 of a rod 26 which is slidably accommodated in the rod 7. The rod 26 is provided with a spring 27 at an end remote from the recess 25, by means of which spring an operating knob 28 connected to the rod 26 is pressed in a direction out of the rod 7. Disposed within the operating knob 28 is a warning knob 29, which is pressed in a direction away from the rod 26 by means of a spring 30. The warning knob 29 preferably has a colour such as red, which functions to warn the user that not all the connectors 11, 12 have been moved to a locking position yet. The operating knob 28 preferably has a colour such as green, which indicates to the user that the connectors 11, 12 are in engagement with the mounting elements. The knob is 28, 29 serve as marking elements. The operation of the mechanism as shown in Fig. 3 will now be explained in more detail with reference to Figs. 3-6.

In the position that is shown in Fig. 3, the connector 11 takes up a position in which it is in engagement with the mounting element. In this position, the draw link 21 has been pulled into the connector 11 in the direction indicated by the arrow P11, causing the lever 22 to pivot about the pivot pin 23 in the direction indicated by the arrow P12, to a position in which it abuts against an end 31 of the recess 25 with one end.

The other connector 12 is not in engagement with the mounting element yet, so that the draw link 21 has not been moved into the connector 12 in the direction indicated by the arrow P11 yet. The lever 22 remains in the tilted position as shown in Fig. 3, in which an end of the lever 22 remote from the draw link 21 abuts against an end 32 of the recess 25 remote from the end 31. The warning knob 29 extends beyond an end of the rod 7, so that the red warning knob 29 is clearly visible to mark the fact that the connectors are not both in engagement with mounting elements yet.

For the sake of completeness it is noted with regard to Fig. 3 that the support leg 16 extends transversely to the plane of the drawing at the moment when the connectors 11, 12 can be moved into engagement with the connecting elements. For the sake of clarity as regards the position of the supporting leg 16, the support leg is shown in the plane of the drawing, however.

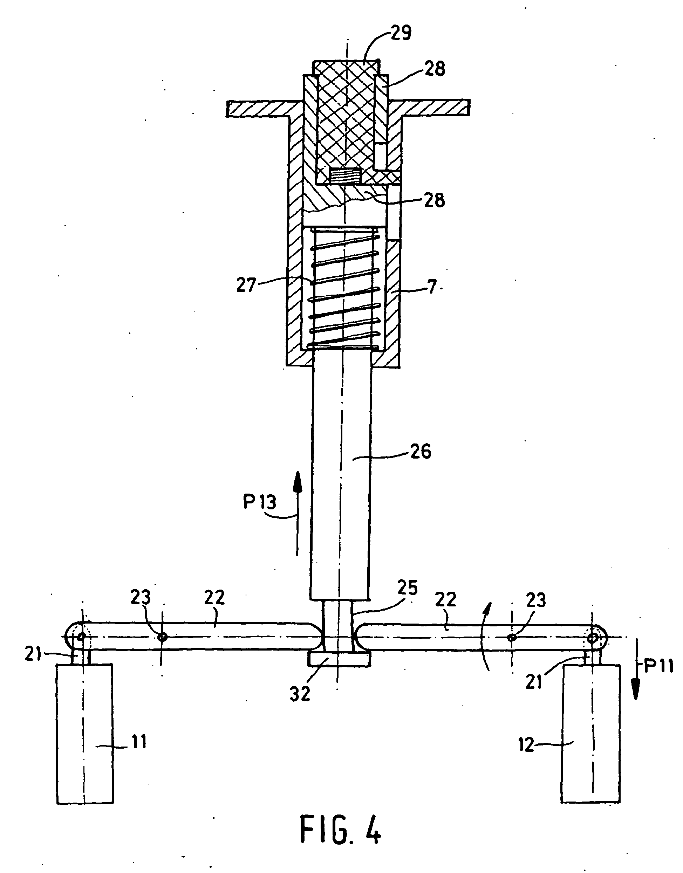

Fig. 4 schematically shows a situation in which both connectors 11, 12 have been moved into engagement with mounting elements, as a result of which the two draw links 21 have moved into the connectors 11, 12 in the direction indicated by the arrow P11 and the two levers 22 have pivoted about the pivot pins 23 to the position that is shown in Fig. 4. As soon as the two levers take up the position that is shown in Fig. 4, the rod 26 is moved jointly with the operating knob 28 in the direction indicated by the arrow P13 with respect to the rod 7 under the influence of the spring 27, until the ends of the levers 22 abut against the end 32 of the recess 25. The green operating knob 28 is slid over the red warning knob 29, so that it is mainly the green operating knob 28 that is visible, which indicates to a user that both of the connectors 11, 12 are correctly in engagement with the mounting elements.

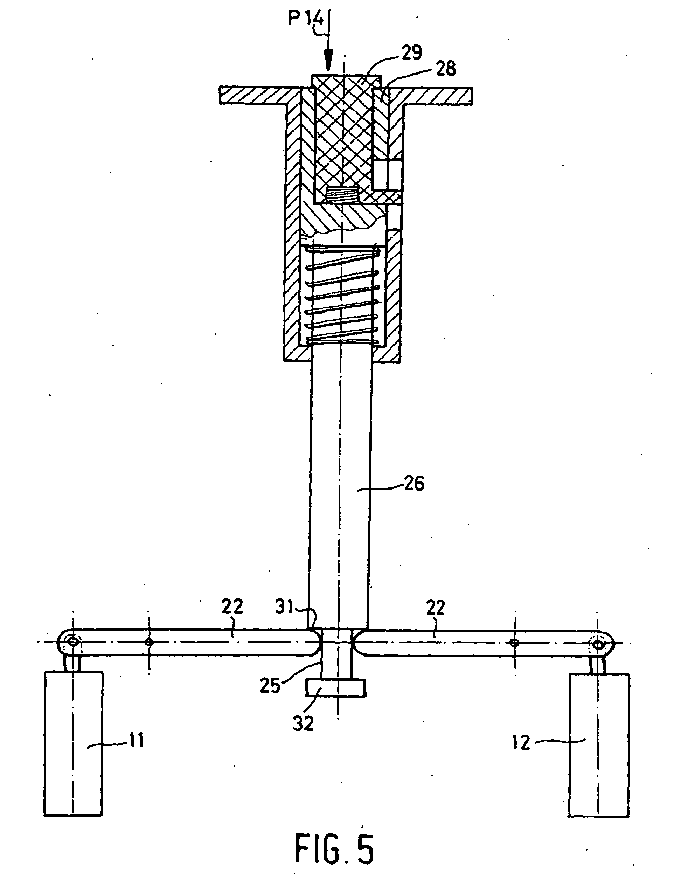

Fig. 5 shows a situation in which a user bumps against a warning knob 29, by accident, for example, thereby pressing the warning knob into the rod 7 over a relatively short distance. As Fig. 5 shows, the warning knob 29 will be moved jointly with the operating knob 28 and the rod 26 in indicated by the arrow P14, opposite to the direction indicated by the arrow P13, whereupon the ends of the levers 22 come into contact with an end 31 of the recess 25.

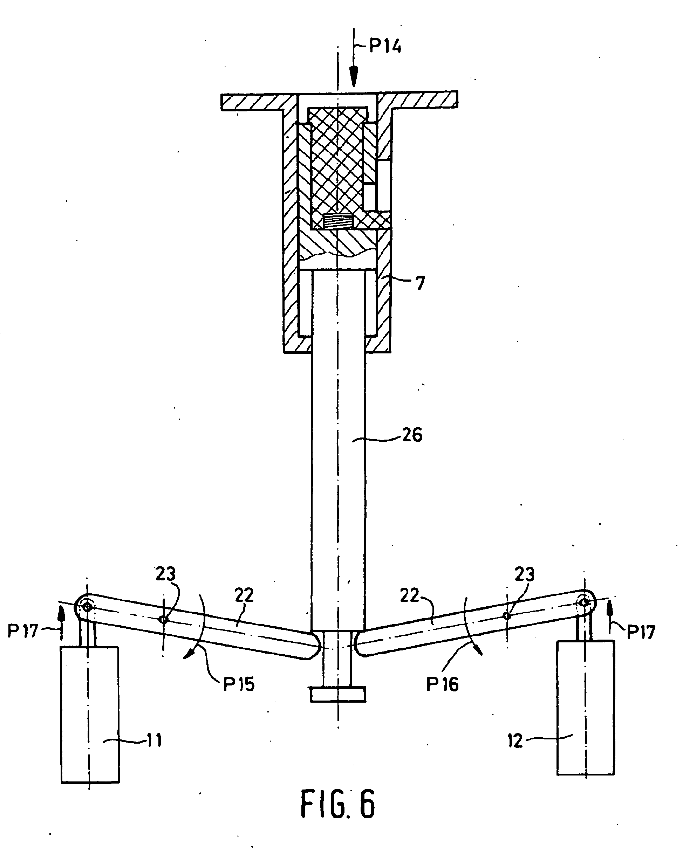

The levers 22 will not be pivoted about the pivot pins 23 in the directions indicated by the arrows P15 and P16, respectively, until the moment the warning knob 29 and the operating knob 28 are jointly pressed further in the direction indicated by the arrow P14 (as shown in Fig. 6) and into the rod 7, as a result of which pivoting the draw links 21 will move out of the connectors 11, 12 in the direction indicated by the arrow P17 and the connectors 11, 12 are jointly unlocked.

The mechanism shown in Figs. 3-6 thus makes it possible in a simple manner to ensure that both of the connectors 11, 12 are locked in position, whilst in addition the unlocking of the two connectors 11, 12 can be realised by operating a single knob.

If the sleeve 13 is provided with a further slot 14, it is possible to have the support leg 16 pivot to a right-hand side of the infant seat 1 instead of to the left-hand side thereof.

Instead of using a single support leg 16, it is also possible to provide the U-shaped bracket 8 with two rods 7 extending parallel to each other, in which case a support leg 16 is attached to each rod 7 in the manner as indicated above.

It is also possible to tilt the support leg 16 to a position under the frame 2, with the tilting movement of the support leg 16 to the storage position resulting in simultaneous movement of the connectors 11, 12 from the mounting position as shown in Fig. 2 to the storage position as shown in Fig. 1.

It is also possible to connect the support leg removably to the frame 2, in which case the connectors 11, 12 are moved against spring force from a storage position to a mounting position upon connection of the support leg to the frame 2, whilst the connectors 11, 12 are automatically moved to a storage position under the influence of spring force upon removal of the support leg 16.

It is also possible to have the support leg 16 rest on a front side of the vehicle seat instead of on a floor of the vehicle.

It is also possible to connect the seat to the frame in such a manner that the back portion is positioned near the support leg, in which case the infant present in the seat faces the rear while being transported.

## Claims

1. An infant vehicle seat (1) comprising a frame (2) as well as connectors (11,12) connected to the frame (2) which, in use, can be detachably connected to mounting elements present in a vehicle, which frame (2) further comprises at least one support leg (16) which, in use, is supported on the vehicle on a side of the infant vehicle seat (1) remote from the connectors (11,12), **characterized in that** the connectors (11, 12) are movable with respect to the frame (2) between a mounting position, in which the infant vehicle seat (1) can be connected to the mounting elements, and a storage position, in which the connectors (11, 12) cannot be connected to the mounting elements, whilst the support leg (16) is movable between a supporting position and a storage position, wherein the connectors (11, 12) are moved from the storage position to the mounting position, and vice versa, in use as a result of movement of the support leg (16) from the storage position to the supporting position.

2. An infant vehicle seat (1) according to claim 1, **characterized in that** the support leg (16) is pivotable between the storage position and the supporting position.

3. An infant vehicle seat (1) according to claim 1 or 2, **characterized in that** the support leg (16) extends substantially vertically in the supporting position, being supported on a floor of the vehicle in use.

4. An infant vehicle seat (1) according to any one of the preceding claims, **characterized in that** the support leg (16) is disposed on the same side of the infant vehicle seat (1) as a seat portion (4) of the infant vehicle seat (1) in the storage position thereof.

5. An infant vehicle seat (1) according to any one of the preceding claims, **characterized in that** the support leg (16) includes an angle (α) with the vertical in the storage position.

6. An infant vehicle seat (1) according to claim 5, **characterized in that** said angle (α) ranges between 20 and 45°.

7. An infant vehicle seat (1) according to any one of the preceding claims, **characterized in that** said support leg (16) is extensible.

8. An infant vehicle seat (1) according to any one of the preceding claims, **characterized in that** the connectors (11, 12) can be set to various mounting positions.

9. An infant vehicle seat (1) according to any one of the preceding claims, **characterized in that** the support leg (16) is provided with a marking element, by means of which it can be indicated in use that all the connectors (11, 12) are connected to the associated mounting elements.

10. An infant vehicle seat (1) according to any one of the preceding claims, **characterized in that** each connector (11, 12) is connected, via a lever (22), to an operating element which extends from a rear side of the infant vehicle seat (1) disposed near the back portion to a front side remote from the rear side of the infant vehicle seat (1).

11. An infant vehicle seat (1) according to claim 10**, characterized in that** the operating element is connected to the support leg (16).

## Patentansprüche

1. Fahrzeugkindersitz (1), umfassend einen Rahmen (2) sowie mit dem Rahmen (2) verbundene Verbindungselemente (11,12), welche im Gebrauch mit den im Fahrzeug vorhandenen Befestigungselementen lösbar verbunden werden können, wobei der Rahmen (2) ferner zumindest eine Stütze (16) umfasst, die sich beim Gebrauch auf der von den Verbindungselementen (11,12) entfernten Seite des Fahrzeugkindersitzes (1) auf das Fahrzeug stützt, **dadurch gekennzeichnet, dass** die Verbindungselemente (11,12) in Bezug auf den Rahmen (2) zwischen einer Montagestellung, in welcher der Fahrzeugkindersitz (1) mit den Befestigungselementen verbunden werden kann, und einer Aufbewahrungsstellung, in der die Verbindungselemente (11,12) nicht mit den Befestigungselementen verbunden werden können, beweglich sind, während die Stütze (16) zwischen einer Stützstellung und einer Aufbewahrungsstellung beweglich ist, wobei im Gebrauch infolge der Bewegung der Stütze (16) aus der Aufbewahrungsstellung in die Stützstellung die Verbindungselemente (11,12) aus der Aufbewahrungsstellung in die Montagestellung und umgekehrt bewegt werden.

2. Fahrzeugkindersitz (1) nach Anspruch 1, **dadurch gekennzeichnet, das** die Stütze (16) zwischen der Aufbewahrungsstellung und der Stützstellung schwenkbar ist.

3. Fahrzeugkindersitz (1) nach Anspruch 1 oder 2, **dadurch gekennzeichnet, dass** die Stütze (16) sich in der Stützstellung im Wesentlichen senkrecht erstreckt, wobei sie sich im Gebrauch auf den Boden des Fahrzeugs stützt.

4. Fahrzeugkindersitz (1) nach einem der vorangehenden Ansprüche, **dadurch gekennzeichnet, dass** die Stütze (16) in ihrer Aufbewahrungsstellung auf derselben Seite des Fahrzeugkindersitzes (1) wie das Sitzteil (4) des Fahrzeugkindersitzes (1) untergebracht ist.

5. Fahrzeugkindersitz (1) nach einem der vorangehenden Ansprüche, **dadurch gekennzeichnet, dass** die Stütze (16) in der Aufbewahrungsstellung einen Winkel (α) mit der Senkrechten bildet.

6. Fahrzeugkindersitz (1) nach Anspruch 5, **dadurch gekennzeichnet, dass** der Winkel (α) im Bereich von 20 bis 45° liegt.

7. Fahrzeugkindersitz (1) nach einem der vorangehenden Ansprüche, **dadurch gekennzeichnet, dass** die Stütze (16) ausziehbar ist.

8. Fahrzeugkindersitz (1) nach einem der vorangehenden Ansprüche, **dadurch gekennzeichnet, dass** die Verbindungselemente (11,12) in verschiedene Montagestellungen eingestellt werden können.

9. Fahrzeugkindersitz (1) nach einem der vorangehenden Ansprüche, **dadurch gekennzeichnet, dass** die Stütze (16) mit einem Markierungselement versehen ist, mittels dessen im Gebrauch angezeigt werden kann, dass alle Verbindungselemente (11,12) mit den zugehörigen Befestigungselementen verbunden sind.

10. Fahrzeugkindersitz (1) nach einem der vorangehenden Ansprüche, **dadurch gekennzeichnet, dass** jedes Verbindungselement (11,12) über einen Hebel (22) mit einem Betätigungselement verbunden ist, das sich von der Rückseite des Fahrzeugkindersitzes (1), nahe der Rückenlehne angebracht, zur von der Rückseite entfernten Vorderseite des Fahrzeugkindersitzes (1) erstreckt.

11. Fahrzeugkindersitz (1) nach Anspruch 10, **dadurch gekennzeichnet, dass** das Betätigungselement mit der Stütze (16) verbunden ist.

## Revendications

1. Siège de véhicule pour enfant (1) comportant un cadre (2) ainsi que des raccords (11, 12) reliés au cadre (2) qui, lors de l'utilisation, peuvent être reliés de manière démontable à des éléments de montage présents dans un véhicule, lequel cadre (2) comporte en outre au moins une branche de support (16) qui, lors de l'utilisation, est supportée sur le véhicule sur un côté du siège de véhicule pour enfant (1) éloigné des raccords (11, 12), **caractérisé en ce que** les raccords (11, 12) sont mobiles par rapport au cadre (2) entre une position de montage, dans laquelle le siège de véhicule pour enfant (1) peut être relié aux éléments de montage, et une position de stockage, dans laquelle les raccords (11, 12) ne peuvent être reliés aux éléments de montage, alors que la branche de support (16) est mobile entre une position de support et une position de stockage, les raccords (11, 12) étant déplacés depuis la position de stockage jusqu'à la position de montage, et vice-versa, lors de l'utilisation du fait du mouvement de la branche de support (16) depuis la position de stockage jusqu'à la position de support.

2. Siège de véhicule pour enfant (1) selon la revendication 1, **caractérisé en ce que** la branche de support (16) peut pivoter entre la position de stockage et la position de support.

3. Siège de véhicule pour enfant (1) selon la revendication 1 ou 2, **caractérisé en ce que** la branche de support (16) s'étend de manière sensiblement verticale dans la position de support, en étant supportée sur un plancher du véhicule lors de l'utilisation.

4. Siège de véhicule pour enfant (1) selon l'une quelconque des revendications précédentes, **caractérisé en ce que** la branche de support (16) est disposée sur le même côté du siège de véhicule pour enfant (1) qu'une partie d'assise (4) du siège de véhicule pour enfant (1) dans la position de stockage de celui-ci.

5. Siège de véhicule pour enfant (1) selon l'une quelconque des revendications précédentes, **caractérisé en ce que** la branche de support (16) comprend un angle (α) avec la verticale dans la position de stockage.

6. Siège de véhicule pour enfant (1) selon la revendication 5, **caractérisé en ce que** ledit angle (α) s'échelonne entre 20 et 45°.

7. Siège de véhicule pour enfant (1) selon l'une quelconque des revendications précédentes, **caractérisé en ce que** la branche de support (16) est extensible.

8. Siège de véhicule pour enfant (1) selon l'une quelconque des revendications précédentes, **caractérisé en ce que** les raccords (11, 12) peuvent être placés dans différentes positions de montage.

9. Siège de véhicule pour enfant (1) selon l'une quelconque des revendications précédentes, **caractérisé en ce que** la branche de support (16) est pourvue d'un élément de marquage, au moyen duquel on peut indiquer lors de l'utilisation que tous les raccords (11, 12) sont reliés aux éléments de montage associés.

10. Siège de véhicule pour enfant (1) selon l'une quelconque des revendications précédentes, **caractérisé en ce que** chaque raccord (11, 12) est relié, par l'intermédiaire d'un levier (22), à un élément d'actionnement qui s'étend depuis un côté arrière du siège de véhicule pour enfant (1) disposé près de la partie de dossier jusqu'à un côté avant éloigné du côté arrière du siège de véhicule pour enfant (1).

11. Siège de véhicule pour enfant (1) selon la revendication 10, **caractérisé en ce que** l'élément d'actionnement est relié à la branche de support (16).
